(19) Europäisches Patentamt
European Patent Office
Office européen des brevets

(11) **EP 3 511 158 A1**

(12) **EUROPEAN PATENT APPLICATION**
published in accordance with Art. 153(4) EPC

(43) Date of publication:
17.07.2019 Bulletin 2019/29

(21) Application number: **17848912.6**

(22) Date of filing: **12.09.2017**

(51) Int Cl.:
**B32B 5/18** (2006.01)          **B32B 27/18** (2006.01)
**B32B 27/28** (2006.01)          **B32B 27/30** (2006.01)
**B32B 27/32** (2006.01)          **C08K 3/04** (2006.01)
**C08L 101/00** (2006.01)

(86) International application number:
**PCT/JP2017/032897**

(87) International publication number:
**WO 2018/047974 (15.03.2018 Gazette 2018/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.09.2016 JP 2016177588**

(71) Applicant: **Sekisui Chemical Co., Ltd.**
**Osaka-shi, Osaka 530-8565 (JP)**

(72) Inventors:
• **MUKOHATA, Daisuke**
**Hasuda-shi**
**Saitama 349-0198 (JP)**

• **SHIMONISHI, Koji**
**Hasuda-shi**
**Saitama 349-0198 (JP)**
• **OOSATO, Yasuo**
**Hasuda-shi**
**Saitama 349-0198 (JP)**
• **SHIMAMOTO, Michio**
**Hasuda-shi**
**Saitama 349-0198 (JP)**

(74) Representative: **Ter Meer Steinmeister & Partner**
**Patentanwälte mbB**
**Nymphenburger Straße 4**
**80335 München (DE)**

(54) **RESIN LAMINATE**

(57) A resin laminate 10 comprises: at least one expandable resin layer 11 containing a resin and a thermally expandable graphite; and at least one foamed resin layer 12 made of a resin foam, wherein the sum of the values obtained by multiplying the thicknesses of the expandable resin layers 11 by expansion ratios is equal to or greater than the total thickness of the foamed resin layers 12.

## Fig. 1

**Description**

Technical Field

The present invention relates to a resin laminate including an expandable resin layer and a foamed resin layer.

Background Art

Conventionally, in transportation fields such as an automobile, a rail vehicle, and an airplane, a resin foam is widely used for members for which flexibility, cushioning properties, and shock resistance or the like are required. For example, a resin foam obtained by foaming a polyolefin-based resin such as polyethylene or polypropylene is widely used. High fire retardance is generally required for the resin foam used in the transportation field, whereby a fire retardant is blended into the resin foam in many cases.

Conventionally, as a fire retardant for blending a resin, a phosphorus fire retardant such as phosphate is widely known. As shown in, for example, PTL 1, a thermally expandable graphite as a fire retardant is also known to be blended into a foam. The thermally expandable graphite is expanded by heating to form a large-volume airspace, whereby the thermally expandable graphite functions as the fire retardant.

Citation List

Patent Literature

PTL 1: JP 10-95887 A

Summary of Invention

Technical Problem

In recent years, in the transportation field, the demand for the fire retardance is increasing every year from the viewpoint of safety, and further improved fire retardance of the resin foam is required. On the other hand, the resin foam has a low density, whereby the resin foam may be more susceptible to fire spreading than a normal resin sheet once the burning of the resin foam is started. Therefore, when the fire retardant such as a thermally expandable graphite or a phosphorus fire retardant is merely blended into the resin foam, demanded performance with respect to the fire retardance may not be sufficiently satisfiable.

The present invention has been achieved in consideration of the above-mentioned situations, and has an object to satisfy high fire retardance required in a transportation field or the like in a resin laminate including a foam.

Solution to Problem

Through extensive investigation, the present inventors found that an expandable resin layer containing a thermally expandable graphite is provided in addition to a foamed resin layer, and a predetermined relationship is provided between the thickness of the foamed resin layer and the thickness of the expandable resin layer to allow the above-mentioned problems to be solved, thus accomplishing the present invention described below.

(1) A resin laminate comprising: at least one expandable resin layer comprising a resin and a thermally expandable graphite; and at least one foamed resin layer made of a resin foam, a sum of values obtained by multiplying thickness of each of the expandable resin layers by expansion ratio of each of the expandable resin layers being equal to or greater than a total thickness of the foamed resin layer or layers.

(2) The resin laminate according to (1), wherein the expandable resin layer is provided on one surface of the foamed resin layer.

(3) The resin laminate according to (1), wherein the expandable resin layer is provided on each of both surfaces of the foamed resin layer.

(4) The resin laminate according to any one of (1) to (3), wherein a total thickness of the expandable resin layer or layers is 0.1 to 10 mm, and the total thickness of the foamed resin layer or layers is 0.5 to 80 mm.

(5) The resin laminate according to any one of (1) to (4), wherein a content of the thermally expandable graphite is 10 to 350 parts by mass per 100 parts by mass of the resin.

(6) The resin laminate according to any one of (1) to (5), wherein the expandable resin layer further comprises a phosphorus compound.

(7) The resin laminate according to (6), wherein a content of the phosphorus compound in the expandable resin layer is 5 to 150 parts by mass per 100 parts by mass of the resin.

(8) The resin laminate according to (6) or (7), wherein the expandable resin layer further comprises an inorganic filler.

(9) The resin laminate according to (8), wherein the content of the phosphorus compound in the expandable resin layer is 5 to 150 parts by mass, and a content of the inorganic filler is 10 to 250 parts by mass, per 100 parts by mass of the resin.

(10) The resin laminate according to any one of (1) to (9), wherein the expansion ratio of the expandable resin layer is 5 to 50 times.

(11) The resin laminate according to any one of (1) to (10), wherein the expandable resin layer comprises at least one of a polyolefin-based resin and a polyvinyl chloride resin as the resin, and the foamed resin layer comprises a polyolefin-based resin.

(12) The resin laminate according to any one of (1) to (11), wherein the expandable resin layer comprises an ethylene-vinyl acetate copolymer as the resin, and the foamed resin layer comprises a polyolefin-based resin.

Advantageous Effects of Invention

The present invention can achieve high fire retardance in a resin laminate including a foamed resin layer.

Brief Description of Drawings

Fig. 1 is a schematic cross-sectional view showing a resin laminate according to a first embodiment.
Fig. 2 is a schematic cross-sectional view showing a resin laminate according to a second embodiment.
Fig. 3 is a schematic cross-sectional view showing a resin laminate according to a third embodiment.

Description of Embodiments

Hereinafter, the present invention will be further described in detail with reference to embodiments.

[Resin Laminate]

A resin laminate of the present invention includes at least one expandable resin layer and at least one foamed resin layer. In the resin laminate, one or more expandable resin layers and one or more foamed resin layers are laminated in suitable order. The expandable resin layer contains a resin and a thermally expandable graphite, and is expanded by heating. The foamed resin layer is made of a resin foam having a large number of cells therein.

In the resin laminate of the present invention, the sum X (hereinafter also referred to as "expansion thickness X") of the values obtained by multiplying the thickness of each of the expandable resin layers by the expansion ratio of each of the expandable resin layers is equal to or greater than the total thickness Y of the foamed resin layer or layers. That is, the relationship between the expansion thickness X and the total thickness Y is represented according to the following formulas.

$$X/Y \geq 1.0$$

$$X = \sum_{k=1}^{m} t_{1k} e_{1k}$$

$$Y = \sum_{k=1}^{n} t_{2k}$$

In the above formulas, m is a constant representing the number of the expandable resin layers, and n is a constant representing the number of the foamed resin layers. $t_{1k}$ means the thickness [mm] of each of the expandable

resin layers, and $e_{1k}$ represents the expansion ratio [times] of each of the expandable resin layers. $t_{2k}$ means the thickness [mm] of each of the foamed resin layers. The expansion ratio is measured in accordance with a method described in Examples to be described later. The expansion ratio is usually obtained by measuring the expandable resin layer torn off from the resin laminate. When the thickness of the expandable resin sheet before being laminated on the resin laminate is the same as that of the expandable resin layer after being laminated, the expansion ratio may be obtained by measurement for the expandable resin sheet.

The formulas will be more specifically described. When the resin laminate includes one expandable resin layer and one foamed resin layer, X and Y are respectively represented by the following formulas.

$$X = t_{11} \times e_{11}$$

$$Y = t_{21}$$

For example, when the resin laminate includes two expandable resin layers and one foamed resin layer, X and Y are respectively represented by the following formulas.

$$X = t_{11} \times e_{11} + t_{12} \times e_{12}$$

$Y = t_{21}$

Furthermore, for example, when the resin laminate includes three expandable resin layers and two foamed resin layers. X and Y are respectively represented by the following formulas.

$$X = t_{11} \times e_{11} + t_{12} \times e_{12} + t_{13} \times e_{13}$$

$$Y = t_{21} + t_{22}$$

In each of the formulas, $t_{11}$, $t_{12}$, and $t_{13}$ respectively represent the thicknesses of the first, second, and third expandable resin layers. $e_{11}$, $e_{12}$, and $e_{13}$ respectively represent the expansion ratios of the first, second, and third expandable resin layers. $t_{21}$ and $t_{22}$ respectively represent the thicknesses of the first and second foamed resin layers.

Herein, the expansion ratio means an expansion ratio in a thickness direction when the expandable resin layer is heated. Therefore, when the resin laminate is heated to a temperature equal to or higher than a predetermined temperature, the expandable resin layers are expanded such that the total thickness of the expandable resin layer or layers is equal to or greater than the total thickness of the foamed resin layer or layers. Therefore, when the resin laminate is heated, each of the expandable resin layers expanded in the thickness direction covers side surfaces of the foamed resin layers, which prevents the foamed resin layers from being burned from the side surfaces thereof.

On the other hand, when the expansion thickness X is less than the total thickness Y of the foamed resin layer or layers, the expandable resin layers cannot sufficiently cover the side surfaces of the foamed resin layers during heating, which cannot sufficiently prevent the foamed resin layers from being burned from the side surfaces thereof.

In the resin laminate, the ratio (X/Y) of the expansion thickness X to the total thickness Y of the foamed resin layer or layers is preferably 1.1 or more, and more preferably 1.5 or more. Thus, the increased ratio (X/Y) is more likely to cause the expandable resin layer to cover the side surface of the foamed resin layer when the resin laminate is heated, and is likely to improve the fire retardance of the resin laminate.

The upper limit of the ratio (X/Y) is not particularly limited, and is preferably 10 or less, and more preferably 5.0 or less in order to prevent the thickness of the expandable resin layer from being increased more than necessary.

When two or more expandable resin layers are provided, the expandable resin layers may have the same constitution or different constitutions from each other. Therefore, the expandable resin layers may have also the same expansion ratio or different expansion ratios from each other.

The total thickness of the foamed resin layer or layers is not particularly limited, and is, for example, 0.5 to 80 mm, preferably 2 to 50 mm, and more preferably 3 to 30 mm. The total thickness is set to be within such a range, whereby the resin laminate can be suitably used as, for example, an interior material in a transportation field.

The thickness of each of the foamed resin layers is not particularly limited, and is, for example, 0.1 to 60 mm, preferably 0.5 to 40 mm, and more preferably 1 to 30 mm. When the resin laminate includes a plurality of foamed resin layers, the plurality of foamed resin layers may have the same thickness or different thicknesses from each other.

The total thickness of the expandable resin layer or layers in the resin laminate is not particularly limited, and is, for example, 0.1 to 10 mm, preferably 0.2 to 5 mm, and more preferably 0.3 to 1.5 mm.

The thickness of each of the expandable resin layers is not particularly limited, and is, for example, 0.1 to 5 mm, preferably 0.2 to 3 mm, and more preferably 0.3 to 1 mm. When the resin laminate includes a plurality of expandable resin layers, the expandable resin layers may have the same thickness or different thicknesses from each other.

Furthermore, the ratio of the total thickness of the expandable resin layer or layers to the total thickness of the foamed resin layer or layers is, for example, preferably 1/40 to 1/3, and more preferably 1/30 to 1/4.

Thus, the decreased total thickness of the expandable resin layer or layers makes possible to improve the fire retardance of the foamed resin layers without impairing most flexibility and lightweight properties of the foamed resin layers. The thickness of each of the foamed resin layers and the expandable resin layers is obtained by measuring the thickness of each of the layers in the laminate, and the total thickness is obtained by totalizing them.

As described above, the expansion ratio of each of the expandable resin layers may be adjusted such that X/Y ≥ 1.0 is set. The expansion ratio is preferably 5 to 50 times. The expansion ratio is 5 times or more, whereby the expansion thickness X can be increased even when the expandable resin layer is comparatively thin. The expansion ratio is 50 times or less, whereby the expandable resin layer can be formed without blending the thermally expandable graphite more than necessary, which is likely to improve the mechanical strength or the like of the expandable resin layer. From these viewpoints, the expansion ratio of each of the expandable resin layers is more preferably 10 to 45 times, and still more preferably 15 to 40 times.

Next, the layer constitution of the resin laminate will be further described in detail. The resin laminate may include at least one expandable resin layer and at least one foamed resin layer, and preferred embodiments thereof include the following first to third embodiments.

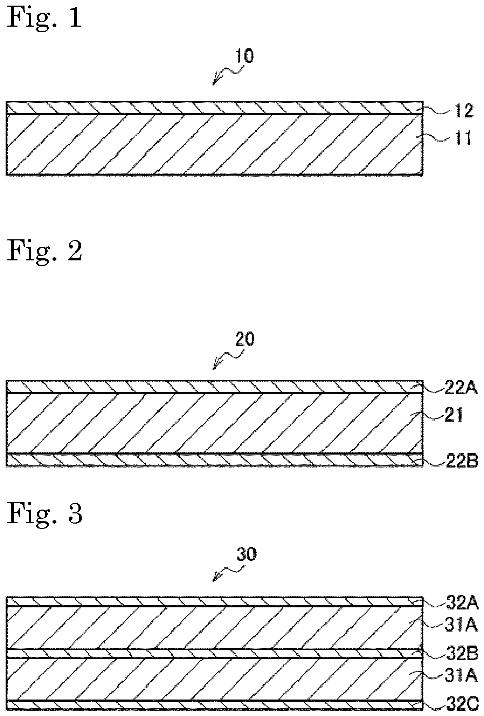

Fig. 1 shows a resin laminate 10 according to a first embodiment. In the resin laminate 10 according to the first embodiment, an expandable resin layer 12 is provided on one surface of a foamed resin layer 11. In the present embodiment, when the foamed resin layer 11 is heated from a side surface thereof, the expandable resin layer 12 provided on one surface is expanded by heating. The expandable resin layer 12 covers the side surface of the foamed resin layer 11, which prevents the foamed resin layer 11 from being burned from the side surface thereof. The expandable resin layer 12 provided on one surface of the foamed resin layer 11 usually goes around also the other surface of the foamed resin layer 11, on the other surface, the expandable resin layer 12 is not provided, which also prevents the resin laminate 10 from being burned from the other surface side thereof.

Fig. 2 shows a resin laminate 20 according to a second embodiment. In the resin laminate 20 according to the second embodiment, expandable resin layers 22A and 22B are provided on both surfaces of a foamed resin layer 21. In the present embodiment, the expandable resin layers 22A and 22B are provided on both the surfaces, whereby a side surface of the foamed resin layer 21 is covered with the expandable resin layers 22A and 22B expanded in a thickness direction from the upper and lower sides when the resin laminate 20 is heated, which more effectively prevents the foamed resin layer 21 from being burned. Furthermore, the expandable resin layers 22A and 22B having high heat resistance are provided on both the surfaces (that is, the outermost surfaces of the resin laminate 20), which also suitably prevents both the surfaces from being burned. Only the two expandable resin layers are provided, whereby the flexibility and lightweight properties of the foamed resin layer 21 are not largely impaired.

Fig. 3 shows a resin laminate 30 according to a third embodiment. The resin laminate 30 according to the third embodiment includes two foamed resin layers 31A and 31B and three expandable resin layers 32A, 32B, and 32C. The expandable resin layers and the foamed resin layers are alternately provided, and the expandable resin layers 32A and 32C are both outermost surfaces of the resin laminate 30. Also in the present embodiment, the expandable resin layer is provided on each of the upper and lower surfaces of each of the foamed resin layers as in the second embodiment. Therefore, when the resin laminate 30 is heated, a side surface of the foamed resin layer is covered with the expandable resin layer which has been expanded, which effectively prevents the foamed resin layer from being burned. Furthermore, the expandable resin layers 22A and 22B are provided on both the outermost surfaces, which also suitably prevents both the surfaces from being burned.

As shown in the above-described embodiment, in the resin laminate, the expandable resin layer is preferably provided on one of the outermost surfaces or each of both the outermost surfaces, and the expandable resin layer is more preferably provided on each of both the outermost surfaces. It is preferable that the expandable resin layers and the foamed resin layers are alternately provided when at least any one of the number of the expandable resin layers and the number of the foamed resin layers is 2 or more.

The number of the expandable resin layers and the number of the foamed resin layers are not particularly limited, and may be about 1 to 10 respectively. As described above, preferably, the number of the expandable resin layers is 1 to 3, and the number of the foamed resin layers is 1 to 2.

Each of the expandable resin layers is usually provided on the surface (one surface or both surfaces) of the foamed resin layer as described above. Herein, each of the expandable resin layers is preferably adhered to the surface of the foamed resin layer directly, and may be adhered to the surface of the foamed resin layer with an adhesion layer made of an adhesive or a pressure-sensitive adhesive or the like, or another layer such as a pressure-sensitive adhesive double coated tape (hereinafter also referred to as "intermediate layer") interposed therebetween.

The intermediate layer has a thickness where the effects of the present invention are not impaired. Specifically, the intermediate layer preferably has a thickness sufficiently smaller than that of each of the foamed resin layers. For example, the intermediate layer has a thickness which is less than 1/5 of that of the foamed resin layer with which the intermediate layer is brought into contact, and preferably a thickness of less than 1/10.

Each of the foamed resin layers may be made of one foamed resin sheet, or may be obtained by stacking a plurality of foamed resin sheets, as described later. Herein, the foamed resin sheets may be directly adhered to each other by thermocompression bonding or the like, or may be adhered to each other with the above-described intermediate layer such as an adhesive layer or a pressure-sensitive adhesive double coated tape interposed therebetween. In such a case, the thickness of the intermediate layer may be included in the total thickness of the foamed resin layer or layers. The total thickness of the intermediate layer or layers in the foamed resin layer is sufficiently smaller than the thickness of the foamed resin layer, preferably less than 1/5 of the thickness of the foamed resin layer, and more preferably less than 1/10.

The expandable resin layer may also be similarly made of one expandable resin sheet, or may be obtained by stacking a plurality of expandable resin sheets.

Hereinafter, the expandable resin layer and the resin laminate will be further described in detail.

[Expandable Resin Layer]

(Resin)

Each of the expandable resin layers contains the resin and the thermally expandable graphite, as described above. The resin used for each of the expandable resin layers serves as a binder resin in the expandable resin layer, and fixes ingredients such as the thermally expandable graphite, and a phosphorus compound and an inorganic filler which will be described later in the expandable resin layer. Examples of the resin include a thermoplastic resin, a rubber substance, and a thermosetting resin. Examples of the thermoplastic resin include a polyolefin-based resin such as a polypropylene resin, a polyethylene resin, a polybutene resin, a polypentene resin, or an ethylene-vinyl acetate copolymer, a polystyrene-based resin, an acrylonitrile-butadiene-styrene-based resin, a polycarbonate-based resin, a polyphenylene ether resin, an acrylic resin, a polyamide resin, a polyvinyl chloride resin, a vinyl chloride-acrylic copolymer, a novolak resin, a polyurethane resin, and a polyisobutylene resin.

Examples of the rubber substance include a natural rubber, an isoprene rubber, a butadiene rubber, a styrene-butadiene rubber, a chloroprene rubber, a nitrile rubber, a butyl rubber, a chlorinated butyl rubber, an ethylene-propylene rubber, an acrylic rubber, an epichlorhydrin rubber, a silicone rubber, a fluorine-containing rubber, a urethane rubber, a chlorosulfonated polyethylene, an olefin-based thermoplastic elastomer, and a styrene-based thermoplastic elastomer.

Examples of the thermosetting resin includes a urethane resin, a phenol resin, an epoxy resin, a urea resin, a melamine resin, an unsaturated polyester resin, and a polyimide resin.

As the resin in the expandable resin layer, the resins listed above may be used singly or in combinations of two or more thereof.

The resin used for the expandable resin layer is preferably the thermoplastic resin. When the thermoplastic resin is used, the expandable resin layer can be pasted on the foamed resin layer by only thermocompression bonding. Examples of the thermoplastic resin herein include a resin having thermoplasticity such as an olefin-based thermoplastic elastomer in the rubber substances listed above. The same applies to the following description.

The thermoplastic resin is preferably a polyolefin-based resin and a polyvinyl chloride resin. Above all, a polyethylene resin and an ethylene-vinyl acetate copolymer are preferable, and particularly the ethylene-vinyl acetate copolymer is more preferable. The use of the ethylene-vinyl acetate copolymer is likely to provide improved fire retardance of the expandable resin layer. As described later, the use of the polyolefin-based resin as the resin in the foamed resin layer provides good adhesiveness between the expandable resin layer and the foamed resin layer, whereby thermocompression bonding is likely to cause the expandable resin layer to easily adhere to the foamed resin layer.

The content of vinyl acetate in the ethylene-vinyl acetate copolymer used for the expandable resin layer is preferably 5 to 55% by mass, and more preferably 10 to 50% by mass. The content of vinyl acetate of 5% by mass or more provides improved adhesiveness of the resin, whereby the thermally expandable graphite is likely to be held by the resin. The expandable resin layer is likely to be caused to adhere to the foamed resin layer. The content of vinyl acetate is measured according to JIS K 7192:1999.

When the ethylene-vinyl acetate copolymer is used for the expandable resin layer, the total of the resin contained in the expandable resin layer may be the ethylene-vinyl acetate copolymer, and a part of the resin may be the ethylene-vinyl acetate copolymer. The content of the ethylene-vinyl acetate copolymer is preferably 30% by mass or more, and more preferably 50% by mass or more based on the total amount of the resin in the expandable resin layer.

For example, polyethylene resins listed in the foam to be described later can be appropriately selected and used as the polyethylene resin used for the expandable resin layer.

(Thermally Expandable Graphite)

The thermally expandable graphite is dispersed in the resin in the expandable resin layer. The thermally expandable graphite is a conventionally known substance, which is produced as a result of production of a graphite intercalation compound by treating a powder of natural scaly graphite, pyrolytic graphite, kish graphite, or the like with an inorganic acid such as concentrated sulfuric acid, nitric acid, or selenic acid, and a strong oxidizing compound such as concentrated nitric acid, perchloric acid, a perchlorate, a permanganate, a bichromate, or hydrogen peroxide. That is, the thermally expandable graphite is a crystalline-compound in which a carbon layer structure is maintained.

The thermally expandable graphite obtained by an acid treatment described above may be further subjected to a neutralization treatment using ammonia, lower aliphatic amine, an alkali metal compound, and an alkaline earth metal compound or the like.

The thermally expandable graphite is expanded by heating to form an expanded heat insulating layer, whereby heat transfer is inhibited to prevent the foamed resin layer from being burned.

The particle size of the thermally expandable graphite is preferably 20 to 200 meshes. In the case of the particle size of 200 mesh or less, the expansion degree of graphite becomes large, whereby a desired expansion ratio can be obtained by a small amount of graphite. In the case of the particle size of 20 mesh or more, defects such as deterioration in dispersibility are likely to be prevented when the thermally expandable graphite is kneaded in the resin. The particle size is measured by a sieve in accordance with JISZ8801-1.

Specific examples of the thermally expandable graphite include "CA-60N" (trade name) manufactured by Air Water Inc., "GREP-EG" (trade name) manufactured by Tosoh Corporation, and "GRAF GUARD220-50N" (trade name) manufactured by GRAFTECH.

The content of the thermally expandable graphite in the expandable resin layer is not particularly limited, and is preferably 10 to 350 parts by mass, more preferably 15 to 120 parts by mass, and still more preferably 20 to 60 parts by mass per 100 parts by weight of the resin in the expandable resin layer. In the case of the content of 10 parts by mass or more, an expandable resin layer having a desired expansion ratio is likely to be formed. In the case of the content of 350 parts by mass or less, the mechanical strength or the like of the expandable resin layer is prevented from being decreased.

(Inorganic Filler and Phosphorus Compound)

The expandable resin layer further contains preferably at least any one of a phosphorus compound and an inorganic filler, more preferably at least the phosphorus compound, and still more preferably both the phosphorus compound and the inorganic filler. The phosphorus compound has shape maintaining performance for the expanded heat insulating layer and the inorganic filler. When the thermally expandable graphite is expanded during heating, to form an expanded heat insulating layer for inhibiting heat transfer, the inorganic filler increases its thermal capacity. The inorganic filler has a function as an aggregate, to provide increased mechanical strength of the expandable resin layer.

Examples of the inorganic filler contained in the expandable resin layer include, but are not particularly limited to, a metal oxide such as alumina, zinc oxide, titanium oxide, calcium oxide, magnesium oxide, iron oxide, tin oxide, antimony oxide, or ferrite; a metal hydroxide such as calcium hydroxide, magnesium hydroxide, aluminum hydroxide, or hydrotalcite; a metal carbonate such as basic magnesium carbonate, calcium carbonate, magnesium carbonate, zinc carbonate, strontium carbonate, or barium carbonate; calcium sulfate, barium sulfate, gypsum fiber, calcium silicate, silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, graphite, carbon fiber, carbon balloon, charcoal powder, various types of metal powder, potassium titanate, magnesium sulfate, lead zirconate titanate, zinc stearate, calcium stearate, aluminum borate, molybdenum sulfide, silicon carbide, stainless steel fiber, zinc borate, various types of magnetic powder, slag fiber, fly ash, and dehydrated sludge. These inorganic fillers may be used singly or in combinations of two or more thereof.

As the inorganic filler, it is preferable to use the metal carbonate, the metal hydroxide, or both the metal carbonate and the metal hydroxide, and specifically, it is more preferable to use aluminum hydroxide, calcium carbonate, or both aluminum hydroxide and calcium carbonate.

The particle size of the inorganic filler is preferably 0.5 to 100 $\mu$m, and more preferably 1 to 50 $\mu$m. In the case of the particle size of 0.5 $\mu$m or more, the dispersibility of the inorganic filler is improved. The particle size is increased, whereby the viscosity of a resin composition for forming the expandable resin layer is likely to be decreased. On the other hand, in the case of the particle size of 100 $\mu$m or less, the surface nature of the expandable resin layer and the dynamic physical properties of the resin composition for forming the expandable resin layer are likely to be improved.

Among the commercialized products of the inorganic filler, examples of aluminum hydroxide include "H-31" (trade name, manufactured by Showa Denko K.K., particle size: 18 $\mu$m), and "B325" (trade name, manufactured by ALCOA, particle size: 25 $\mu$m), and examples of calcium carbonate include "WHITON SB (red)" (trade name, manufactured by Bihoku Funka Kogyo Co., Ltd., particle size: 1.8 $\mu$m), and "BF300" (trade name, manufactured by Bihoku Funka Kogyo Co., Ltd., particle size: 8 $\mu$m).

Examples of the phosphorus compound contained in the expandable resin layer include red phosphorus; various phosphates such as triphenyl phosphate, tricresyl phosphate, trixylenyl phosphate, cresyl diphenyl phosphate, and xylenyl diphenylphosphate; metal salts of phosphoric acids such as sodium phosphate, potassium phosphate, magnesium phosphate, and monoaluminum phosphate; metal salts of phosphorous acids such as sodium phosphite, potassium phosphite, magnesium phosphite, and aluminum phosphite; ammonium polyphosphates such as ammonium polyphosphate and melamine-modified ammonium polyphosphate; phosphonate-based compounds such as methylphosphonic acid, dimethyl methylphosphate, diethyl methylphosphate, ethylphosphonic acid, n-propylphosphonic acid, n-butylphosphonic acid, 2-methylpropylphosphonic acid, t-butylphosphonic acid, 2,3-dimethyl-butylphosphonic acid, octylphosphonic acid, and phenylphosphonic acid, dioctylphenylphosphonate; and phosphinic acid compounds such as dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, and bis(4-methoxyphenyl)phosphinic acid. These may be used singly or in combinations of two or more thereof.

Among these, the ammonium polyphosphates are preferable, and above all, ammonium polyphosphate is more preferable. Examples of the commercialized product include EXOLIT AP series manufactured by Clariant, and "FR CROS 484" and "FR CROS 487" (trade names) manufactured by Budenheim Iberica.

The content of the phosphorus compound in the expandable resin layer is preferably 5 to 150 parts by mass per 100 parts by mass of the resin. The content of the inorganic filler is preferably 10 to 250 parts by mass per 100 parts by mass of the resin. The contents of the phosphorus compound and the inorganic filler are set to be within these ranges, whereby the expansion ratio of the expandable resin layer is likely to be adjusted to the above-described range, and the fire retardant performance of the expandable resin layer is likely to be improved.

From these viewpoints, the content of the phosphorus compound is more preferably 15 to 120 parts by mass, and still more preferably 20 to 60 parts by mass per 100 parts by mass of the resin. On the other hand, the content of the inorganic filler is more preferably 15 to 200 parts by mass, and still more preferably 20 to 80 parts by mass per 100 parts by mass of the resin.

The total of the inorganic filler and the thermally expandable graphite is preferably 25 to 500 parts by mass, and more preferably 30 to 200 parts by mass.

(Other Additives)

The expandable resin layer may contain further an additive other than the above. Examples of such an additive include a plasticizer such as phthalate ester (for example, diisodecyl phthalate), fatty acid ester, epoxidized ester, trimellitic acid ester, or processing oil, an antioxidant based on phenol, amine, or sulfur, a metal toxicity inhibitor, an antistatic agent, a stabilizer, a cross-linking agent, a lubricant (for example, acrylic acid-based polymer external lubricant), a softener, a pigment, and a molding auxiliary agent. These may be used singly or in combinations of two or more thereof.

[Resin Foam]

The resin foam has a large number of cells in the resin.

The resin used for the resin foam can be appropriately selected and used from the listed resins which can be used for the above-described expandable resin layer. Among these, the thermoplastic resin is preferably used. When the thermoplastic resin is used, the foamed resin layer can be pasted on the expandable resin layer by only thermocompression bonding. In order to easily paste the foamed resin layer on the expandable resin layer, each of the resins used for the resin foam and the expandable resin layer is more preferably the thermoplastic resin.

The resin used for the resin foam is preferably the polyolefin-based resin in the thermoplastic resin, and more preferably the polypropylene resin and the polyethylene resin in the polyolefin-based resin.

Examples of the polypropylene resin include a homopolypropylene which is a homopolymer of propylene, and a copolymer of propylene and an $\alpha$-olefin other than propylene.

Examples of the copolymer of propylene and the $\alpha$-olefin other than propylene include a block copolymer, a random copolymer, and a random block copolymer. Examples of the $\alpha$-olefin other than propylene include ethylene having 2 carbon atoms and an $\alpha$-olefin having about 4 to 10 carbon atoms such as 1-butene, 1-pentene, 1-hexene, 4-methyl-1-pentene, 1-heptene, or 1-octene. Among these, ethylene is preferred from the viewpoints of formability and heat resistance. In the copolymer, the $\alpha$-olefins may be used singly or in combinations of two or more thereof.

In the copolymer, a constitutional unit derived from propylene serves as a main ingredient, and the content thereof is, for example, 80% by mass or more, and preferably 90% by mass or more.

Examples of the polyethylene resin include a low-density polyethylene resin, a medium-density polyethylene resin, a high-density polyethylene resin, and a linear low-density polyethylene resin. As the polyethylene resin, a polyethylene resin polymerized using a polymerization catalyst composed of a metallocene compound, or the like may be used.

The polyethylene resin may be an ethylene homopolymer, or a polyethylene resin obtained by copolymerizing ethylene and a small amount of $\alpha$-olefin other than ethylene. In the copolymer, a constitutional unit derived from ethylene serves as a main ingredient, and the content thereof is, for example, 80% by mass or more, and preferably 90% by mass or more. Specific examples of the $\alpha$-olefin include propylene, 1-butene, 1-pentene, 4-methyl-1-pentene, 1-hexene, 1-heptene, and 1-octene.

These polyethylene resins and polypropylene resins may be used singly or in combinations of two or more thereof.

When the polyolefin-based resin is used for the foamed resin layer, the total of the resin contained in the foamed resin layer may be the polyolefin-based resin, and a part of the resin may be the polyolefin-based resin. The content of the polyolefin-based resin is preferably 70% by mass or more of the resin of the foamed resin layer, and more preferably 90% by mass or more.

The resin foam preferably has cells formed by foaming a resin using various foaming agents. The foaming agent to be used is, for example, a chemical foaming agent, and preferably a thermally decomposable foaming agent which is decomposed by heating to generate a gas. Examples of the thermally decomposable foaming agent include an organic or inorganic chemical foaming agent having a decomposition temperature of about 160 to 270°C.

Examples of the organic foaming agent include an azo compound such as azodicarbonamide, metal azodicarboxylate (such as barium azodicarboxylate), or azobisisobutyronitrile; a nitroso compound such as N,N'-dinitrosopentamethylenetetramine; a hydrazine derivative such as hydrazodicarbonamide, 4,4'-oxybis(benzenesulfonyl hydrazide), or toluenesulfonyl hydrazide; and a semicarbazide compound such as toluenesulfonyl semicarbazide.

Examples of the inorganic foaming agent include acid ammonium, sodium carbonate, ammonium hydrogencarbonate, sodium hydrogencarbonate, ammonium nitrite, sodium borohydride, and monosodium citrate anhydrous.

Among these compounds, from the viewpoint of obtaining fine cells and from the viewpoints of cost effectiveness and safety aspect, an azo compound and a nitroso compound are preferred; azodicarbonamide, azobisisobutyronitrile, and N,N'-dinitrosopentamethylenetetramine are more preferred; and azodicarbonamide is particularly preferred. These thermally decomposable foaming agents may be used singly or in combinations of two or more thereof.

The content of the thermally decomposable foaming agent is preferably 0.5 to 30 parts by mass, and more preferably 1 to 20 parts by mass per 100 parts by mass of the resin such that suitable foaming can be provided without the cells of the foam being ruptured.

In the method for decomposing the thermally decomposable foaming agent for foaming, a resin into which a foaming agent is blended may be heated by a known heating method.

The foam may be cross-linked, and may be, for example, obtained by cross-linking a resin before foaming. Examples of the method for cross-linking a resin include a method including irradiating the resin with ionizing radiation such as electron beam, $\alpha$ ray, $\beta$ ray or $\gamma$ ray, and a method including previously blending an organic peroxide into the resin and heating the resin for decomposition of the organic peroxide. These methods may be used in combination. Among these, an irradiation method using an ionizing radiation is preferred.

The foam may be appropriately stretched. The resin composition may be foamed, and then stretched, or the resin composition may be stretched while being foamed.

The foam may be obtained by foaming the resin composition using method other than the above-described chemical foaming agents. For example, the foam may be obtained by foaming the resin composition according to physical foaming. In this case, a resin may be impregnated with a gas for forming cells in place of using the thermally decomposable foaming agent. As the gas for forming cells, a high-pressure inert gas is preferably used. Examples of the inert gas include carbon dioxide, nitrogen gas, air, and butane gas, and carbon dioxide is preferred. These gases may be used singly or in combinations of two or more thereof. The resin is preferably impregnated with the inert gas in a supercritical state or a subcritical state.

The foamed resin layer may appropriately contain an additive conventionally used for the foam. The foamed resin layer may contain an additive other than the above-described ones such as a cross-linking auxiliary agent, an antioxidant, an agent for adjusting decomposition temperature, a fire retardant, a metal toxicity inhibitor, an antistatic agent, a stabilizer, a filler, and a pigment.

The apparent density of the resin foam is preferably 10 to 250 kg/m$^3$, and more preferably 20 to 100 kg/m$^3$. The apparent density is set to be within such a range, whereby the resin foam can have suitable flexibility and mechanical strength. For example, the resin foam can be suitably used as an interior material in the transportation field. The apparent density is measured in accordance with JIS K 7222.

The cells contained in the resin foam are preferably closed cells. Herein, the closed cells mean that a closed cell ratio is 70% or more, and the closed cell ratio is preferably 90% or more. The closed cell ratio means one measured in accordance with ASTM D2856 (1998).

As the foam, a commercialized product may be used, and for example, "Softron" (trade name) series manufactured by Sekisui Chemical Co., Ltd. and Thai Sekisui Foam, Co., Ltd., or the like may be used.

The use field of the resin laminate of the present invention is not particularly limited, and the resin laminate can be widely used in, for example, fields in which the foam is conventionally used. The resin laminate is preferably used as interior materials for various vehicles such as an automobile, a rail vehicle, and an airplane. For example, the resin laminate may be appropriately used with the resin laminate pasted on other materials such as an artificial leather, a synthetic leather, a natural leather, a fabric, a knitted fabric, and a resin sheet.

[Method for Manufacturing Resin Laminate]

In a method for manufacturing a resin laminate of the present invention, first, at least one expandable resin sheet and at least one foamed resin sheet are prepared. The expandable resin sheet and the foamed resin sheet can be produced by known methods.

For example, the expandable resin sheet may be obtained by blending a thermally expandable graphite, and an inorganic filler, a phosphorus compound, and other additives as necessary into a resin, kneading the blended product by using a kneading apparatus such as a mono-axial extruder, a Banbury mixer, a kneader mixer, or a roll, and thereafter molding the kneaded product into a sheet according to press molding or the like.

The foamed resin sheet may be produced, for example, by blending a foaming agent, and other additives as necessary into a resin, kneading the blended product by using the kneading apparatus, molding the kneaded product into a sheet to obtain a sheet-shaped resin composition, and thereafter foaming the resin composition using the foaming agent. The sheet-shaped resin composition may be foamed by heating the resin composition in a heating furnace or the like, for example, when the foaming agent is a thermally decomposable foaming agent.

The foamed resin sheet may also be obtained by blending other additives as necessary into a resin, kneading the blended product by using the kneading apparatus, and impregnating the resin with a gas for forming cells while molding the kneaded product into a sheet. The foamed resin sheet may also be obtained by known methods other than these methods.

The foamed resin sheet or the sheet-shaped resin composition may be appropriately cross-linked, stretched, and so on.

Next, the expandable resin sheet and the foamed resin sheet are pasted to obtain a resin laminate. Herein, as the pasting method, the expandable resin sheets of the desired number and the foamed resin sheets of the desired number may be stacked in desired lamination order, and heated and pressurized by a pressing machine or the like for thermocompression bonding. Alternatively, the expandable resin sheet and the foamed resin sheet may be pasted by a pressure-sensitive adhesive, an adhesive, or a pressure-sensitive adhesive double coated tape or the like, that is, by applying a pressure-sensitive adhesive or an adhesive or the like to an adhesion surface between the expandable resin sheet and the foamed resin sheet, or sticking a pressure-sensitive adhesive double coated tape.

The foamed resin sheets may be appropriately pasted, or the expandable resin sheets may be appropriately pasted. For example, a plurality of foamed resin sheets may be pasted by thermocompression bonding, or a pressure-sensitive adhesive, an adhesive, or a pressure-sensitive adhesive double coated tape or the like, to form one foamed resin layer. By heating and pressurizing for pasting the expandable resin sheet and the foamed resin sheet, the foamed resin sheets may be pasted, or the expandable resin sheets may be pasted. At another timing, the foamed resin sheets may be pasted, or the expandable resin sheets may be pasted.

In another manufacturing method, the expandable resin sheet may be extrusion-laminated on the surface of the foamed resin produced by the method, to produce a resin laminate.

In still another manufacturing method, the expandable resin sheet and the foamed resin sheet may be simultaneously produced, to produce a resin laminate. A multilayer melt extrusion method can be used as the manufacturing method. Examples of the multilayer melt extrusion method include a multi-manifold method and a feed block method. Specifically, a resin composition 1 as a raw material of the expandable resin sheet is introduced into a first extruder, and a resin composition 2 as a raw material of the foamed resin sheet is introduced into a second extruder. The resin composition 1 and the resin composition 2 are simultaneously extruded. The extruded resin compositions 1 and 2 are sent to a feed block. In the feed block, the resin compositions 1 and 2 join together. This makes it possible to produce a resin laminate in which the expandable resin sheet and the foamed resin sheet are laminated.

Examples

The present invention will be further described in detail with reference to Examples. The present invention is not limited to Examples.

A measuring method and an evaluating method for each of physical properties in the present invention are as follows.

[Expansion ratio]

An expandable resin layer cut into a size of 60 mm $\times$ 60 mm was set in a metal frame made of stainless steel and having an inside dimension of 60 mm $\times$ 60 mm and a height of 80 mm. The metal frame in which the expandable resin layer was set was placed in an electric furnace, heated in the electric furnace set to 600°C for 30 minutes, and thereafter removed. Then, an expansion ratio was calculated by the following method.

Expansion ratio (times) = (thickness of expandable resin layer after heating)/(thickness of expandable resin layer before heating)

[Fire retardance]

A resin laminate cut into a size of 50 mm in width $\times$ 300 mm in length was set in a metal support frame, and perpendicularly fixed. Then, the resin laminate was brought into contact with flame having a height of 38 mm for 60 seconds such that the tip of the flame was at a position separated by 19 mm from the lower end of the resin laminate. Then, the following burning duration and burning distance were evaluated in accordance with FAR25.853 (a) defined by the U.S. Federal Aviation Administration. When all the acceptance criteria were satisfied, the fire retardance was evaluated as A, and when any one of the acceptance criteria was not satisfied, the fire retardance was evaluated as B.

(Acceptance Criterion of Burning Duration)

The burning duration of the resin laminate after being separated from the flame is measured, and the average value of the burning durations in three repeated tests is 15 seconds or less.

(Acceptance Criterion of Burning Duration of Falling Object)

The burning duration of a falling object from a specimen is measured, and the average value of the burning durations in three repeated tests is 3 seconds or less.

(Acceptance Criterion of Burning Distance)

The specimen after being separated from the flame is visually observed. A distance between the lower end of the specimen and the burned portion thereof is measured, and the average value of the distances in three repeated tests is 152 mm or less.

When at least one specimen was completely burned by the three repeated tests, the burning duration and the burning distance were defined as "no record", and the fire retardance was evaluated as B.

Materials used in Examples and Comparative Examples are as follows.

Ethylene-vinyl acetate copolymer (I): "Evaflex EV45LX" (trade name) manufactured by Du Pont Mitsui Polychemicals Co., Ltd., vinyl acetate content: 46% by mass
Ethylene-vinyl acetate copolymer (II): "Evaflex EV460" (trade name) manufactured by Du Pont Mitsui Polychemicals Co., Ltd., vinyl acetate content: 19% by mass
Linear low-density polyethylene: "AFFINITY PL1850G" (trade name) manufactured by Dow Chemical Company
Polyvinyl chloride resin: "TH-1000" (trade name) manufactured by Taiyo Vinyl Corporation
Vinyl chloride-acrylic copolymer: "AG-16ZE" (trade name) manufactured by Tokuyama Sekisui Co., Ltd.
Acrylic polymer external lubricant: "L-1000" (trade name) manufactured by Mitsubishi Chemical, Inc.
Diisodecyl phthalate: "DIDP" (trade name) manufactured by J-PLUS Co., Ltd.
Tricresyl phosphate: "Sansosizer TCP" (trade name) manufactured by New Japan Chemical Co., Ltd.
Thermally expandable graphite (I): "CA-60N" (trade name) manufactured by Air Water Inc.
Thermally expandable graphite (II): "EXP 50SE160" (trade name) manufactured by Fujikokuen Kogyo Co., Ltd.
Ammonium polyphosphate: "EXOLIT AP422" (trade name) manufactured by Clariant
Monoaluminum phosphate: "100P" (trade name) manufactured by Taki Chemical Co., Ltd.
Aluminum phosphite: "APA-100" (trade name) manufactured by Taihei Chemical Industrial Co., Ltd.
Calcium carbonate: "BF300" (trade name) manufactured by Bihoku Funka Kogyo Co., Ltd.
Aluminum hydroxide: "H-31" (trade name) manufactured by Showa Denko K.K.

Foamed resin sheet (I): "Softron SP" (trade name) manufactured by Sekisui Chemical Co., Ltd., thickness: 5 mm, apparent density: 40 kg/m$^3$, closed cell polypropylene foam

Foamed resin sheet (II): "Softron" (trade name) manufactured by Thai Sekisui Foam, Co., Ltd., thickness: 12 mm, apparent density: 24 kg/m$^3$, closed cell polyethylene foam

Examples 1 to 8 and Comparative Examples 1 to 5

100 g of a mixture having each composition shown in Table 1 was melt-kneaded, and then heat-pressed under a pressure of 20 MPa at 130°C to obtain an expandable resin sheet. The foamed resin sheets (I) and (II) were prepared as described in Table 2. When a plurality of foamed resin sheets were prepared, the plurality of foamed resin sheets were stacked, and previously pasted by heat-pressing under a pressure of 0.1 MPa at 130°C such that the thickness did not change.

Next, the expandable resin sheet and the foamed resin sheet or the pasted plurality of foamed resin sheets were stacked in order of a constitution shown in Table 3, and pasted by heat-pressing under a pressure of 0.1 MPa at 130°C such that the thickness of each layer did not change, to obtain a resin laminate.

The various characteristics of the expandable resin layer, the various characteristics of the foamed resin layer, and the various characteristics and evaluation results of the resin laminate are respectively shown in Table 1, Table 2, and Table 3. In the present Examples, an expansion ratio was measured for the expandable resin sheet before being pasted on the foamed resin layer.

Table 1

| | | | Kinds | | | | |
|---|---|---|---|---|---|---|---|
| | | | A | B | C | D | E |
| Compositions (parts by mass) | Resins and additives | Ethylene-vinyl acetate copolymer (I) | 100 | - | 100 | - | - |
| | | Ethylene-vinyl acetate copolymer (II) | - | 100 | - | - | - |
| | | Linear low-density polyethylene | - | - | - | 100 | - |
| | | Polyvinyl chloride resin | - | - | - | - | 50 |
| | | Vinyl chloride-acrylic copolymer | - | - | - | - | 4 |
| | | Acrylic polymer external lubricant | - | - | - | - | 5 |
| | | Diisodecyl phthalate | - | - | - | - | 30 |
| | Thermally expandable graphites | Thermally expandable graphite (I) | 25 | 50 | 25 | 25 | - |
| | | Thermally expandable graphite (II) | - | - | - | - | 100 |
| | Phosphorus compounds | Ammonium polyphosphate | 25 | - | 100 | 100 | - |
| | | Monoaluminum phosphate | - | 50 | - | - | - |
| | | Aluminum phosphite | - | - | - | - | 67 |
| | | Tricresyl phosphate | - | - | - | - | 11 |
| | Inorganic fillers | Calcium carbonate | 25 | - | 100 | 100 | - |
| | | Aluminum hydroxide | - | - | 50 | 50 | - |
| Characteristics | | Thickness (mm) | 0.5 | 0.4 | 0.5 | 0.5 | 0.5 |
| | | Expansion ratio (times) | 22.4 | 30.5 | 16.8 | 10.4 | 33.4 |

EP 3 511 158 A1

Table 2

| | | Kinds | | | | | | | |
|---|---|---|---|---|---|---|---|---|---|
| | | a | b | c | d | e | f | g | h |
| Number of sheets to be laminated (sheets) | Foamed resin sheet (I) | 1 | 2 | 3 | 4 | 5 | 6 | 7 | - |
| | Foamed resin sheet (II) | - | - | - | - | - | - | - | 1 |
| Characteristics | Thickness (mm) | 5 | 10 | 15 | 20 | 25 | 30 | 35 | 12 |

Table 3

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Constitutions | Kind of expandable resin layer | A | A | A | A | B | B | C | D | E | B | B | B | B |
| | Kind of foamed resin layer | a | b | c | h | a | d | b | a | a | a | b | h | a |
| | Laminate constitution | AaA | AbA | AcA | AhA | BaB | BdB | CbC | DaD | EaE | Ba | Bb | Bh | CaCaC |
| Characteristics | X(mm) | 22.4 | 22.4 | 22.4 | 22.4 | 24.4 | 24.4 | 16.8 | 10.4 | 33.4 | 12.2 | 12.2 | 12.2 | 25.2 |
| | Y(mm) | 5 | 10 | 15 | 12 | 5 | 20 | 10 | 5 | 5 | 5 | 10 | 12 | 10 |
| | X/Y | 4.48 | 2.24 | 1.49 | 1.87 | 4.88 | 1.22 | 1.68 | 2.08 | 6.68 | 2.44 | 1.22 | 1.02 | 2.52 |
| Evaluation results | Fire retardance | A | A | A | A | A | A | A | A | A | A | A | A | A |
| | Burning duration (seconds) | 0 | 0 | 2 | 0.7 | 0 | 0 | 0 | 12 | 0 | 13 | 1 | 1 | 1 |
| | Burning duration of falling object (seconds) | 0 | 0 | 0 | 0 | 0 | 0 | 0 | 0 | 0 | 0 | 0 | 0 | 0 |
| | Burning distance (mm) | 40.4 | 16 | 102 | 96 | 79.7 | 65.6 | 16 | 46.6 | 14 | 48 | 60 | 53 | 22 |

EP 3 511 158 A1

Table 4

| | | Comparative Examples | | | | | | |
|---|---|---|---|---|---|---|---|---|
| | | 1 | 2 | 3 | 4 | 5 | 6 | 7 |
| Constitutions | Kind of expandable resin layer | A | A | B | C | D | E | B |
| | Kind of foamed resin layer | e | f | c | d | c | g | c |
| | Laminate constitution | AeA | AfA | Bc | BdB | DcD | EgE | CcCcC |
| Characteristics | X (mm) | 22.4 | 22.4 | 12.2 | 16.8 | 10.4 | 33.4 | 25.2 |
| | Y (mm) | 25 | 30 | 15 | 20 | 15 | 35 | 30 |
| | X/Y | 0.90 | 0.75 | 0.81 | 0.84 | 0.69 | 0.95 | 0.84 |
| Evaluation results | Fire retardance | B | B | B | B | B | B | B |
| | Burning duration (seconds) | NG | NG | NG | NG | NG | NG | NG |
| | Burning duration of falling object (seconds) | NG | NG | NG | NG | NG | NG | NG |
| | Burning distance (mm) | NG | NG | NG | NG | NG | NG | NG |

\* In Tables 3 and 4, the burning duration and the burning distance represent the average value of the three repeated tests. NG represents no record in even one repeated test of the three repeated tests.

As shown in the above Examples 1 to 13, the expandable resin layer was provided in addition to the foamed resin layer, and the expansion thickness X of the expandable resin layer was equal to or greater than the total thickness Y of the foamed resin layer or layers, whereby the fire retardance could be improved. While on the other hand, in Comparative Examples 1 to 7, the expandable resin layer was provided in addition to the foamed resin layer, but the expansion thickness X of the expandable resin layer was less than the total thickness Y of the foamed resin layer or layers, whereby the fire retardance could not be improved.

Reference Signs List

10, 20, 30: resin laminate
11, 21, 31A, 31B: foamed resin layer
12, 22A, 22B, 32A to 32C: expandable resin layer

**Claims**

1. A resin laminate comprising:

   at least one expandable resin layer comprising a resin and a thermally expandable graphite; and
   at least one foamed resin layer made of a resin foam,
   a sum of values obtained by multiplying thickness of each of the expandable resin layers by expansion ratio of each of the expandable resin layers being equal to or greater than a total thickness of the foamed resin layer or layers.

2. The resin laminate according to claim 1, wherein the expandable resin layer is provided on one surface of the foamed resin layer.

3. The resin laminate according to claim 1, wherein the expandable resin layer is provided on each of both surfaces of the foamed resin layer.

4. The resin laminate according to any one of claims 1 to 3,

wherein

a total thickness of the expandable resin layer or layers is 0.1 to 10 mm, and the total thickness of the foamed resin layer or layers is 0.5 to 80 mm.

5. The resin laminate according to any one of claims 1 to 4, wherein a content of the thermally expandable graphite is 10 to 350 parts by mass per 100 parts by mass of the resin.

6. The resin laminate according to any one of claims 1 to 5, wherein the expandable resin layer further comprises a phosphorus compound.

7. The resin laminate according to claim 6, wherein a content of the phosphorus compound in the expandable resin layer is 5 to 150 parts by mass per 100 parts by mass of the resin.

8. The resin laminate according to claim 6 or 7, wherein the expandable resin layer further comprises an inorganic filler.

9. The resin laminate according to claim 8,

wherein

the content of the phosphorus compound in the expandable resin layer is 5 to 150 parts by mass, and a content of the inorganic filler is 10 to 250 parts by mass, per 100 parts by mass of the resin.

10. The resin laminate according to any one of claims 1 to 9, wherein the expansion ratio of the expandable resin layer is 5 to 50 times.

11. The resin laminate according to any one of claims 1 to 10,

wherein

the expandable resin layer comprises at least one of a polyolefin-based resin and a vinyl chloride resin as the resin, and the foamed resin layer comprises a polyolefin-based resin.

12. The resin laminate according to any one of claims 1 to 11,

wherein

the expandable resin layer comprises an ethylene-vinyl acetate copolymer as the resin, and the foamed resin layer comprises a polyolefin-based resin.

Fig. 1

10

12
11

Fig. 2

20

22A
21
22B

Fig. 3

30

32A
31A
32B
31A
32C

## INTERNATIONAL SEARCH REPORT

| International application No. |
|---|
| PCT/JP2017/032897 |

| A. CLASSIFICATION OF SUBJECT MATTER |
|---|
| *B32B5/18*(2006.01)i, *B32B27/18*(2006.01)i, *B32B27/28*(2006.01)i, *B32B27/30* (2006.01)i, *B32B27/32*(2006.01)i, *C08K3/04*(2006.01)i, *C08L101/00*(2006.01)i |

According to International Patent Classification (IPC) or to both national classification and IPC

| B. FIELDS SEARCHED |
|---|
| Minimum documentation searched (classification system followed by classification symbols) <br> B32B5/18, B32B27/18, B32B27/28, B32B27/30, B32B27/32, C08K3/04, C08L101/00 |

| Documentation searched other than minimum documentation to the extent that such documents are included in the fields searched |
|---|
| Jitsuyo Shinan Koho          1922–1996   Jitsuyo Shinan Toroku Koho   1996–2017 <br> Kokai Jitsuyo Shinan Koho    1971–2017   Toroku Jitsuyo Shinan Koho   1994–2017 |

| Electronic data base consulted during the international search (name of data base and, where practicable, search terms used) |
|---|
| |

### C. DOCUMENTS CONSIDERED TO BE RELEVANT

| Category* | Citation of document, with indication, where appropriate, of the relevant passages | Relevant to claim No. |
|---|---|---|
| X <br> Y | JP 11-131630 A  (Sekisui Chemical Co., Ltd.), 18 May 1999 (18.05.1999), claims 1, 9, 15 to 16; paragraphs [0016] to [0017], [0019], [0039] to [0044], [0079], [0081] to [0082], [0128] to [0131]; table 1 (Family: none) | 1-11 <br> 12 |
| X | JP 11-201374 A  (Sekisui Chemical Co., Ltd.), 30 July 1999 (30.07.1999), claims 1, 2; paragraphs [0006] to [0011], [0014] to [0026], [0036] to [0038], [0043] to [0048], [0050] to [0051], [0056] to [0059]; tables 1 to 2 (Family: none) | 1-2,4-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 October 2017 (30.10.17) | 14 November 2017 (14.11.17) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |
|---|---|

Form PCT/ISA/210 (second sheet) (January 2015)

**INTERNATIONAL SEARCH REPORT**

International application No.

PCT/JP2017/032897

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-161982 A  (Sekisui Chemical Co., Ltd.), 22 June 2006 (22.06.2006), claim 4; paragraphs [0008] to [0011], [0031] to [0039], [0044], [0047] (Family: none) | 12 |
| A | JP 10-109373 A  (Sekisui Chemical Co., Ltd.), 28 April 1998 (28.04.1998), entire text (Family: none) | 1-12 |
| A | JP 2000-104366 A  (Sekisui Chemical Co., Ltd.), 11 April 2000 (11.04.2000), entire text (Family: none) | 1-12 |
| A | JP 2007-326908 A  (Shin-Etsu Chemical Co., Ltd.), 20 December 2007 (20.12.2007), entire text & US 2007/0282027 A1 entire text & KR 10-2007-0116733 A   & CN 101085852 A & TW 200813141 A | 1-12 |

Form PCT/ISA/210 (continuation of second sheet) (January 2015)

**EP 3 511 158 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10095887 A